# EUROPEAN PATENT APPLICATION

(11) **EP 1 737 109 A1**
(43) Date of publication of application: **27.12.2006**
(21) Application number: 05720347.3
(22) Date of filing: 09.03.2005
(51) Int. Cl.: H02K 29/00, H02K 5/10

(54) **BRUSHLESS MOTOR**

(30) Priority: 11.03.2004 JP 2004069679
(71) Applicant: Valeo Thermal Systems Japan Corporation, Kohnan-machi, Osato-gun Saitama (JP)
(72) Inventor: TAKAHASHI, Osamu, VALEO THERMAL SYSTEMS JAPAN CORP, Osato-gun Saitama 3600193 (JP); UMEGAKI, Fuhito, VALEO THERMAL SYSTEMS JAPAN CORP, Osato-gun Saitama 3600193 (JP)
(74) Representative: Gesthuysen, von Rohr & Eggert
(86) International application number: PCT/JP2005/004075
(87) International publication number: WO 2005/088809

(57) **Abstract**

A brushless motor that is highly waterproof and highly watertight is provided.

The brushless motor has a casing I configured to incorporate and hold a circuit board 4 and to support a rotor 3 rotatably. The casing 1 is configured such that the first annular wall 21a of a motor cover 21 is secured in part to the inner circumferential surface of the second annular wall 22a of a board cover 22. The first annular wall 21a has an annular groove 21c in its outer circumferential surface. An O-ring 23 is fitted in the annular groove 21c, accomplishing a highly waterproof and watertight sealing between the motor cover 21 and the board cover 22.

## Description

### Technical Field

The present invention relates to a brushless motor. More particularly, the invention relates to a brushless motor that is improved in terms of waterproofness and watertightness.

### Background Art

Brushless motors of this type have been well known to the public. Each of these motors has a Stator, a motor holder holding the stator, a rotor rotatably supported by the stator, a lower case secured to that side of the motor holder which faces away from the stator, and a circuit board provided in a casing constituted by the motor holder and the lower case. (See, for example, Patent Document 1.)

In the conventional brush motor of this type, the casing has vents so that heat may be efficiently radiated from the electronic components mounted on the circuit board, particularly transistors and ICs. If the brushless motor is used in a place full of moisture, some measures must be taken against water. For example, the motor may be so located that water drops may not enter the casing through the vents. Alternatively, a bulkhead, for example, may be provided at the position where the motor is secured. Inevitably, the freedom of position for the motor is small. In particular, if the brushless motor is used to drive the fan incorporated in an air conditioner for use in vehicles, it should naturally be waterproof because vehicles are exposed to various meteorological conditions. It is therefore demanded that the brushless motor be more waterproof and more watertight.
Patent Document 1: Japanese Patent Application Laid-Open Publication No. 11-346458

### Disclosure of the Invention

### Problems that the Invention shall Solve

The present invention has been made in consideration of the foregoing. The invention aims at providing a brushless motor that is highly waterproof and highly watertight, without necessity of taking no special measures when it is used.

### Means for Solving the Problems

An embodiment of this invention is a brushless motor that comprises a casing configured to hold a circuit board and support a rotor, allowing the same to rotate.

The casing has a first case member and a second case member, each having an annular wall at the circumference of the bottom part. The first and second case members are fitted to each other, with the annular wall of one case member contacts the inner circumferential surface of the annular wall of the other case member. A storage space is provided between the first case member and the second case member. In the storage space, the circuit board is held.

An O-ring is mounted on the outer circumferential surface of the one case member.

### Advantage of the Invention

According to the present invention, the O-ring is provided between the first and second case members that constitute the casing that contains the circuit board. The O-ring achieves watertight junction between the first and second case members. Water drops, for example, are reliably prevented from entering the casing through the junction. Thus, the invention can provide a brushless motor that is highly watertight, unlike the conventional brushless motor.

### Brief Description of the Drawings

- Fig. 1: is a vertical sectional view showing the configuration of a brushless motor according to an embodiment of the invention;
- Fig. 2: is a plan view of the brushless motor shown in Fig. 1, with the fan not attached to it yet;
- Fig. 3: is a side view of the brushless motor shown in Fig. 1, with the fan not attached to it yet;
- Fig. 4: is a bottom view of the brushless motor shown in Fig. 1;
- Fig. 5: is an exploded, vertical sectional view of the motor, showing the major components and explaining the sequence of assembling the casing;
- Fig. 6: is a partial sectional view depicting another configuration designed to render the motor cover and the board cover more watertight; and
- Fig. 7: is a partial sectional view showing still another configuration designed to make the junction between the motor cover and the board cover more watertight.

### Explanation of Reference Symbols

- 1: Casing
- 2: Stator
- 3: Rotor
- 21: Motor cover
- 21a: Bottom of the motor cover
- 21b: First annular wall
- 21c: Annular groove
- 22: Board cover
- 22a: Bottom of the board cover
- 22b: Second annular wall
- 23: O-ring

### Description of Specific Embodiment

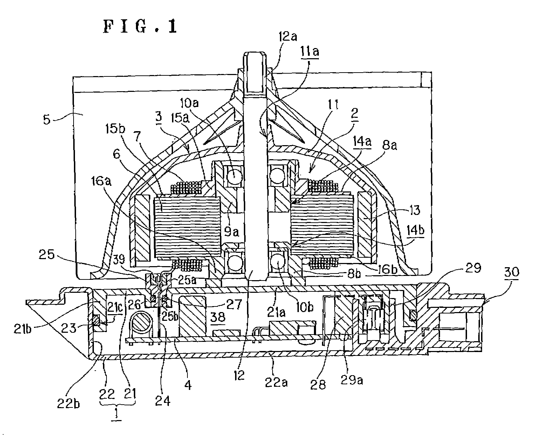

An embodiment of the present invention will be described, with reference to FIG. 1 to FIG. 5.

The components and the arrangement thereof, described below, do not limit the present invention. Various changes and modifications can be made within the scope and spirit of this invention.

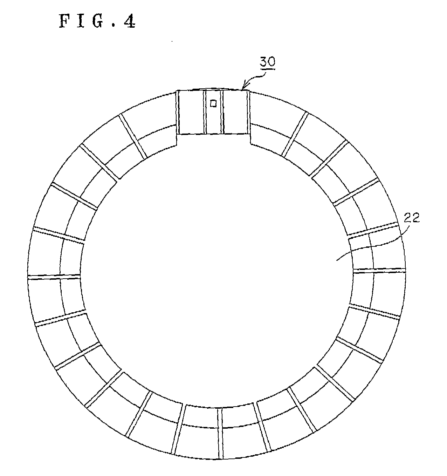

First, the configuration of a brushless motor according to this embodiment of the invention will be described with reference to FIG. I to FIG. 4.

The brushless motor of the embodiment of the present invention is mainly composed of a stator 2 whose base portion is fixed to a casing 1, a rotor 3 rotatably provided on the stator 2, and a circuit board 4 controlling current supply to an exciting coil 7 wound around the stator 2 (see Fig. 1). The brushless motor having such a structure is used for rotary-driving, for example, a blower 5 in a vehicle air-conditioner, and the blower 5 is fixed to a tip 12a of a rotary shaft 12 (see Fig. 1).

The stator 2 in the embodiment of the present invention has a laminated core 6, the exciting coil 7 wound around the laminated core 6, an upper insulation cover 8a, and a lower insulation cover/bearing holder 8b, and is disposed inside the rotor 3.

The upper insulation cover 8a has: a portion 15a in a hollow cylindrical shape; and a ring-shaped flange 15b provided at an appropriate position on an outer peripheral surface of the portion 15a. An upper bearing holder 9a is press-fitted in the portion 15a in the hollow cylindrical shape. The upper bearing holder 9a holds an upper bearing 10a and has an upper press-fitted portion 14a in a columnar shape press-fitted to an upper portion (a rotor 3 side in Fig. 1) of the laminated core 6.

The lower insulation cover/bearing holder 8b is disposed on a lower side (a casing I side in Fig. 1) of the laminated core 6 to function as an insulation cover similarly to the aforesaid upper insulation cover 8a, and also houses/holds a lower bearing 10b. Specifically, similarly to the aforesaid upper insulation cover 8a, the lower insulation cover/bearing holder 8b has: a portion 16a in a substantially hollow cylindrical shape in which the lower bearing 10b is disposed; and a ring-shaped flange 16b formed at an appropriate position on an outer peripheral surface of the portion 16a. Further, at an end of the portion 16a on an opposite side of the casing 1, a lower press-fitted portion 14b press-fitted in a lower portion of the laminated core 6 is provided.

In the laminated core 6, the upper press-fitted portion 14a of the upper bearing holder 9a is press-fitted in the upper center portion thereof and the lower press-fitted portion 14b of the lower insulation cover/bearing holder 8b is press-fitted to the lower center portion thereof, so that the laminated core 6 is sandwiched and supported by the upper insulation cover 8a and the upper bearing holder 9a and the lower insulation cover/bearing holder 8b from above and under (see Fig. 1).

In the lower insulation cover/bearing holder 8b, an end portion opposite the end portion where the lower press-fitted portion 14b is formed is fixed to the motor cover 21 being a first case member constituting the casing 1. Center portions of the upper bearing holder 9a and the lower insulation cover/bearing holder 8b are hollow, and the rotary shaft 12 is inserted through the hollow portions, so that the rotary shaft 12 is rotatably supported on the casing 1 by the upper bearing 10a and the lower bearing 10b.

The rotor 3 has a yoke 11 substantially in a bowl shape. An open surface of the yoke 11 is positioned on a casing 1 side and a closed surface thereof forms an upper surface. The rotary shaft 12 is inserted through a through hole 11a formed in a center portion of the closed surface, so that the rotor 3 is fixed to the shaft 12 and held on the casing 1.

On an inner peripheral surface of the yoke 11, a plurality of magnets 13 are fixedly arranged in a circumferential direction at appropriate intervals and face a peripheral surface of the laminated core 6 via an appropriate interval (see Fig. 1).

The casing I comprises a motor cover 21 and a board cover 22. The casing I according to this invention has no vents through which air may enter the casing 1 from outside, unlike the casing of the conventional motor. The casing I is configured as a closed container.

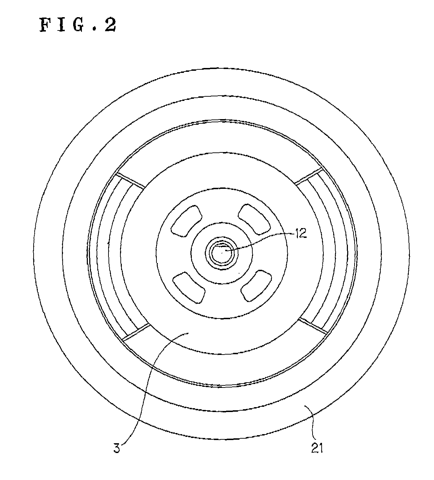

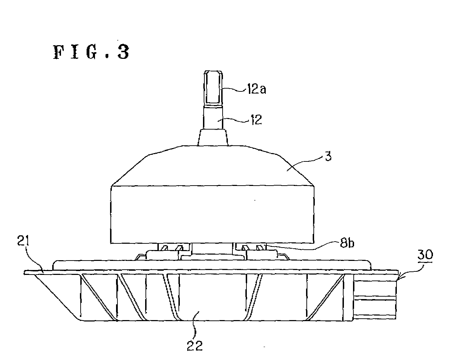

The motor cover 21, i.e., first case member, is shaped generally like a disc as viewed from above (see Fig. 2). The cover 21 comprises a motor-cover bottom 21a and a first annular wall 21b. The bottom 21a is shaped generally like a disc. The first annular wall 21b stands upright from the circumferential edge of the motor-cover bottom 21a (see Fig. 1). The rotor 3 is rotatably supported above the motor cover 21 (see Fig. 1 and Fig. 3) as described before.

The first annular wall 21b has an annular groove 21c made in its outer circumferential surface. An O-ring 23 is fitted in the annular groove 21c. Thus, the O-ring 23 is wrapped around the first annular wall 21b.

The circuit board 4 is fastened with screws (not shown) to the back side of the board cover 22, i.e., the side facing away from the rotor 3 that is rotatably supported.

The circuit board 4 and the excitation coil 7 are electrically connected to each other by a terminal bar 24 that is made of electrically conducive material. That is, the terminal bar 24 used in this embodiment of the invention is generally U-shaped at one end and connected to the excitation coil 7. That part of the terminal bar 24, which lies immediately below the U-shaped end, is embedded in a waterproof case 25 (see Fig. 1).

The waterproof case 25 according to this invention is shaped generally like a hollow cylinder. It consists of a large-diameter part 25a and a small-diameter part 25b. The large-diameter part 25a is a bottomed hollow cylinder. The U-shaped end of the terminal bar 24 is located in the large-diameter part 25a. The part of the terminal bar 24, which lies immediately below the U-shaped part and is as long as the small-diameter part 25b, is embedded in the small-diameter part 25b. The remaining part of the terminal bar 24 is led outside from the small-diameter part 25b.

At an appropriate position on the motor-cover bottom 21a, a hollow cylindrical member 26 protrudes toward the lower side of the board cover 22. The small-diameter part 25b of the waterproof case 25 is inserted in the hollow cylindrical member 26. Note that an O-ring 27 is wrapped around the outer circumferential surface of the small-diameter part 25b, in order to ensure waterproofness at the junction between the case 25 and the hollow cylindrical member 26,

With the waterproof case 25 inserted in the hollow cylindrical member 26 as mentioned above, the excitation coil 7 is soldered at one end to one end of the U-shaped part of the terminal bar 24. Thereafter, the hollow of the large-diameter part 25a is filled with adhesive 39. The other end of the terminal bar 24 is soldered to the circuit board 4 (see Fig. 1).

The board cover 22, i.e., second case member, is shaped generally like a disc as viewed from the bottom, just like the motor cover 21 (see Fig. I and Fig. 4). It comprises a board cover bottom 22a and a second annular wall 22b. The second annular wall 22b stands upright from the circumferential edge of the board cover bottom 22a (see Fig. 1). The second annular wall 22b has an inside diameter that is almost equal to the outside diameter of the first annular wall 21b of the motor cover 21 (see Fig. 1).

Thus, the motor cover 21 is fitted in the board cover 22, with the first annular wall 21b set in contact with the inner circumferential surface of the second annular wall 22b of the board cover 22 (see Fig. 1). A harvesting space 38 is provided between the motor cover 2 and the board cover 22.

A cover-side connector 29 is integrally formed with the board cover bottom 22a of the board cover 22 in the present embodiment. The cover-side connector 29 is fitted into a board-side connector 28 secured to the circuit board 4 when the motor cover 21 is fitted into the board cover 22. The cover-side connector 29 is so positioned to be fitted into the board-side connector 28 when the motor cover 21 is fitted into the board cover 22. The cover-side connector 29 has a connector terminal 29a that is embedded when the board cover 22 is made by resin molding. Its one end is located at a connector 30 for external connection, which is provided in the outer circumferential surface of the board cover 22 (see Fig. 1). An external connector (not shown) is connected to the connector 30. The power-supply voltage and drive pulses can therefore be applied from outside to the circuit board 4 through the connector 30, the cover-side connector 29 and the board-side connector 28.

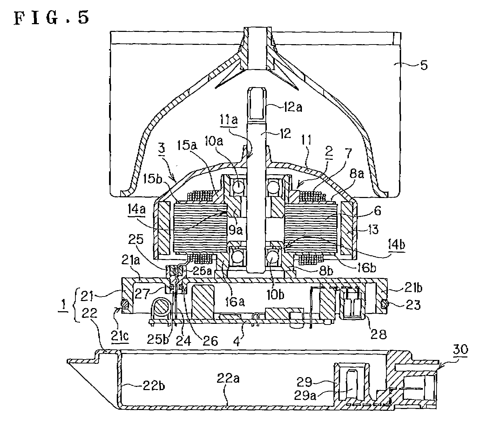

The sequence of coupling the motor cover 21 and the board cover 22 will be explained, with reference to Fig. 5.

Assume that the stator 2, the rotor 3, etc. and the circuit board 4 have been secured to the motor cover 21, and that the O-ring 23 has already been wrapped around the first annular wall 21b.

Under this condition, the first annular wall 21b of the motor cover 21 and the second annular wall 22b of the board cover 22 are set at prescribed positions with respect to the circumferential direction, such that the board-side connector 28 of the circuit board 4 is aligned with the cover-side connector 29 of the board cover 22. Then, the first annular wall 21b is pushed little by little into the board cover 22. As the first annular wall 21b is so pushed, the board-side connector 28 and the cover-side connector 29 are gradually fitted concurrently with the push of the motor cover 21 against the board cover 22 if the first annular wall 21b and the second annular wall 22b are appropriately positioned, respectively in the circumferential direction.

The mutual coupling of the board-side connector 28 and cover-side connector 29 begins after the pushing the motor cover 21 into the board cover 22 is initiated, Hence, the resistance to the force applied to push the motor cover 21 increases. Against this increasing force, the motor cover 21 is further pushed. The moment the board-side connector 28 and the cover-side connector 29 are completely coupled, the motor cover 21 can no longer be pushed into the board cover 22. Thus, the motor cover 21 and the board cover 22 are coupled to each other, constituting the casing 1,

Note that the fan 5 may be secured to the rotating shaft 12, either before or after the motor cover 21 and the board cover 22 are coupled.

As described above, the O-ring 23 is wound around the junction between the motor cover 21 and the board cover 22. The junction is therefore extremely watertight.

The motor cover 21 is made of aluminum, while the board cover 22 is made of resin, in the present embodiment. If the casing I is exposed to high temperatures for a long time, the motor cover 21 and the board cover 22 may expand in diameter direction (i.e., in the direction at right angles to the rotating shaft 12, in Fig. 1), to different degrees due to the difference in coefficient of linear expansion between aluminum and resin. That is, the board cover 22, which is made of resin, more expands in diameter direction than the motor cover 21. In the worst case, so large a gap may develop between the covers 21 and 22 that the O-ring 23 cannot ensure a watertight coupling of the covers 21 and 22.

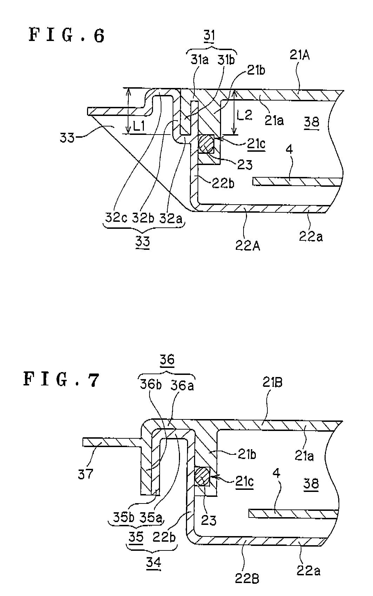

Fig. 6 and Fig. 7 show other configurations that have been designed in consideration of such a decrease in watertightness as mentioned above. These configurations will be explained, with reference to these figures. The components identical to those of the configuration shown in Fig. I to Fig. 5 are designated at the same reference numbers and will not be described in detail.

The configuration shown in FIG. 6 will be described first.

In this configuration, the motor cover 21A has a first reinforcing/holding strip 31 outside the first annular wall 21b. The strip 31 is formed as follows.

That is, the first reinforcing/holding strip 31 has an extension part 31a and a motor-cover-side coupling part 31b. The extension part 31a protrudes a little such that the motor-cover bottom 21a of the motor cover 21A projects outwards from the junction between it and the first annular wall 21b. The motor-cover-side coupling part 31b is bent at right angles at the end of the extension part 31a and extends parallel to the first annular wall 21b.

The gap between the motor-cover-side coupling part 31b and first annular wall 21b is of such a value that the second annular wall 22b is just fitted in the gap. The height of the motor-cover-side coupling part 31b, i.e., distance L1 between the surface of the motor-cover bottom 21 a (on which the stator 2 is provided) and the end of the motor-cover-side coupling part 31b, is smaller than the distance L2 between the surface of the motor-cover bottom 21a and the annular groove 21c. (Namely, L1 < L2.)

Since the annular groove 21c is cut by using a lathe, the first reinforcing/holding strip 31 will prevent the bite on the lathe may not reach a position where it can cut the annular groove 21c if the end part of the first reinforcing/holding strip 31 lies beyond the annular groove 21c.

On the other hand, the board cover 22A has a second reinforcing/holding strip 32, which is provided outside the second annular wall 22b as will be described below.

The second reinforcing/holding strip 32 has an abutting part 32a and a board cover-side coupling part 32b. The abutting part 32a protrudes outwards from the outer circumferential surface of the second annular wall 22b, on which the end part of the first reinforcing/holding strip 31 is located, when the end of the second annular wall 22b is fitted into the gap between the first reinforcing/holding strip 31 and the first annular wall 21b (see Fig. 6). The board cover-side coupling part 32b is bent at right angles at the end of the abutting part 32a and extends parallel to the second annular wall 22b. Further, an end of the board cover-side coupling part 32b lies at the same position as the motor-cover bottom 21a of the motor cover 21A, while the end part of the second annular wall 22b remains clamped between the first reinforcing/holding strip 31 and the first annular wall 21b. In addition, an extension strip 32c extends outwards from the end part of the board cover-side coupling part 32b. Reinforcing ribs 33 are provided between the second reinforcing/holding strip 32 and the second annular wall 22b.

The first reinforcing/holding strip 31 and the second reinforcing/holding strip 32, thus configured, can be changed in shape as will be described below.

First, the first reinforcing/holding strip 31 can be provided, in part, at the circumferential edge of the first annular wall 21b, and the second reinforcing/holding strip 32 can be similarly provided, in part, at the circumferential edge of the second annular wall 22b.

Next, the first reinforcing/holding strip 31 can be made continuous to the circumferential edge of the first annular wall 21b, while the second reinforcing/holding strip 32 can be provided, in part, at the circumferential edge of the second annular wall 22b.

Further, the first reinforcing/holding strip 31 can be provided, in part, at the circumferential edge of the first annular wall 21b, while the second reinforcing/holding strip 32 can be made continuous to the circumferential edge of the second annular wall 22b.

Finally, the first reinforcing/holding strip 31 can be made continuous to the circumferential edge of the first annular wall 21b, and the second reinforcing/holding strip 32 can be similarly made continuous to the circumferential edge of the second annular wall 22b.

In any of these configurations, the second annular wall 22b of the board cover 22A has its end part fitted in the gap between the first reinforcing/holding strip 31 and first annular wall 21b of the motor cover 21A, Therefore, the first reinforcing/holding strip 31 and the first annular wall 21b prevent the board cover 22A from expanding in the diameter direction, even if the board cover 22A made of resin material, is exposed to extremely high temperatures for a long time. This reduces the possibility that a gap develops between the first annular wall 21 b and the second annular wall 22b. The junction between these walls can reliably remain sufficiently watertight.

The configuration of Fig. 7 will be described.

In this configuration, a board cover 22B has a folded part 34 at the end of its second annular wall 22b. The folded part 34 has been formed as will be described below.

The second annular wall 22b of the board cover 22B is folded outwardly, forming the folded strip 35. The folded strip 35 has a first extension part 35a and a second extension part 35b. The first extension part 35a extends parallel to the board cover bottom 22a, outwards from the second annular wall 22b. The second extension part 35b extends at right angles from the end of the first extension part 35a, toward the board cover bottom 22a and parallel to the second annular wall 22b. The folded strip 35 and the second annular wall 22b constitute the folded part 34, which is has a cross section that is generally U-shaped as viewed in the rotating shaft 12 direction.

On the other hand, the motor cover 21B has a reinforcing/holding strip 36 at the edge of the first annular wall 21b. The strip 36 has been formed as will be described below.

The reinforcing/holding strip 36 is similar in basic configuration to the first reinforcing/holding strip 31 shown in Fig. 6, except for its size. More specifically, the reinforcing/holding strip 36 has a bottom extension part 36a and a coupling part 36b. The bottom extension part 36a is a part of the motor-cover bottom 21a, which protrudes a little from the junction between the motor-cover bottom 21a and first annular wall 21b of the motor cover 21B. The coupling part 36b has been formed by bending an end part of the bottom extension part 36a at right angles and therefore extends parallel to the first annular wall 21b. The gap between the coupling part 36b and the first annular wall 21b is of such a value that the above-mentioned folded part 34 is fitted in it well. In this configuration, the gap between the coupling part 36b and the first annular wall 21b, i.e., the width of the folded part 34 (measured in the left-to-right direction in Fig. 7), can be of such a value that the bite on the lathe may be positioned between the coupling part 36b and the first annular wall 21b at the time of cutting the annular groove 21c. Hence, the level at which the end part of the coupling part 36b lies is not limited as for the first reinforcing/holding strip 31. A projection 37 protrudes from the coupling part 36b, reinforcing this part 36b.

In this configuration, the folded part 34 of the board cover 22B is fitted between the reinforcing/holding strip 36 and first annular wall 21b of the motor cover 21B. Thus, the board cover 22B, which is made of resin material, is prevented from expanding in its diameter direction even if it is exposed to extremely high temperatures for a long time. No gap therefore develops between the first annular wall 21b and the second annular wall 22b. Sufficient watertight seal between these walls is thereby attained.

In the configuration shown in FIG. 7, too, the reinforcing/holding strip 36 and the folded strip 35 can be formed in four conditions, by combining the case where they are formed in part and the case where they are formed continuous, as has been described in conjunction with the configuration shown in FIG. 6.

In the configuration shown in FIG. 1, the motor cover 21 is made of aluminum, whereas the board cover 22 is made of resin. Instead, the motor cover 21 may be made of resin and the board cover 22 may be made of aluminum. In this case, the motor cover 21, which is made of resin, is provided inside the board cover 22. No gap will therefore develop between the motor cover 21 and the board cover 22, due to such thermal expansion as described above.

### Industrial Applicability

An O-ring is provided between two members that constitute a casing, thus preventing water from flowing into the casing from outside. This structure can therefore be applied to apparatuses that should be waterproof, such as a brushless motor for driving the fan incorporated in an air conditioner for use in vehicles.

## Claims

1. A brushless motor having a casing that incorporates and holds a circuit board and supports the rotor, allowing the same to rotate,
**characterized in that** the casing has a first case member and a second case member, each having a bottom part and an annular wall at the circumference of the bottom part; the first and second case members are fitted together, with an outer circumferential surface of the annular wall of one case member contacts the inner circumferential surface of the annular wall of the other case member; a space accommodating the circuit board is provided between the first case member and the second case member; and an O-ring is wrapped around the outer circumferential surface of said one case member.

2. The brushless motor according to claim 1, **characterized in that** a first reinforcing/holding strip extends from the outer surface of one case member, away from the bottom part thereof; that part of the annular wall of the other case member, which lies near the end, is fitted between the first reinforcing/holding strip and the annular wall; and a second reinforcing/holding strip extends from the annular wall of the other case member such that the first reinforcing/holding strip is fitted between the second reinforcing/holding strip and the annular wall of the other case member.

3. The brushless motor according to claim 2, **characterized in that** a plurality of first reinforcing/holding strips are formed, each in part on the annular wall of one case member, and a plurality of second reinforcing/holding strips are formed, each in part on the annular wall of the other case member.

4. The brushless motor according to claim 2, **characterized in that** a first reinforcing/holding strip is formed, continuously on the annular wall of one case member, and a plurality of second reinforcing/holding strips are formed, each in part on the annular wall of the other case member.

5. The brushless motor according to claim 2, **characterized in that** a plurality of first reinforcing/holding strips are formed, each in part on the annular wall of one case member, and a second reinforcing/holding strip is formed, continuously on the annular wall of the other case member.

6. The brushless motor according to claim 2, **characterized in that** a first reinforcing/holding strip is formed, continuously on the annular wall of one case member, and a second reinforcing/holding strip is formed, continuously on the annular wall of the other case member.

7. The brushless motor according to any one of claims 2 to 6, **characterized in that** a height from the bottom part to the end of the first reinforcing/holding strip does not exceed a height from the bottom part to the O-ring.

8. The brushless motor according to claim 7, **characterized in that** the rotor is rotatably supported on one surface of the bottom part of one case member, and the annular wall of one case member stands on the other surface of the bottom part.

9. A brushless motor **characterized in that** a folded strip extends from the outer surface of the annular wall of the other case member toward the bottom part, forming a folded part jointly with the annular wall; a reinforcing/holding strip extends from the outer surface of the annular wall of one case member; and the folded part is fitted between the reinforcing/holding strip and the annular wall of one case member.

10. The brushless motor according to claim 9, **characterized in that** a plurality of reinforcing/holding strips are formed, each in part on the annular wall of one case member, and a plurality of folded strips are formed, each in part on the annular wall of the other case member.

11. The brushless motor according to claim 9, **characterized in that** a plurality of reinforcing/holding strips are formed, each continuously on the annular wall of one case member, and a plurality of folded strips are formed, each in part on the annular wall of the other case member.

12. The brushless motor according to claim 9, **characterized in that** a plurality of reinforcing/holding strips are formed, each in part on the annular wall of one case member, and a plurality of folded strips are formed, each continuously on the annular wall of the other case member.

13. The brushless motor according to claim 9, **characterized in that** a plurality of reinforcing/holding strips are formed, each continuously on the annular wall of one case member, and a plurality of folded strips are formed, each continuously on the annular wall of the other case member.

14. The brushless motor according to any one of claims 9 to 13, **characterized in that** the rotor is rotatably supported on one surface of the bottom part of one case member, and the annular wall of one case member stands on the other surface of the bottom part.
